# EUROPÄISCHE PATENTSCHRIFT

(11) **EP 3 285 061 B1**
(45) Veröffentlichungstag und Bekanntmachung des Hinweises auf die Patenterteilung: **25.05.2022**
(21) Anmeldenummer: 17182031.9
(22) Anmeldetag: 19.07.2017
(51) Int. Cl.: G01N 3/42

(54) **VERFAHREN UND VORRICHTUNG ZUR HÄRTEPRÜFUNG**
METHOD AND DEVICE FOR HARDNESS TESTING
PROCÉDÉ ET DISPOSITIF DE TEST DE DURETÉ

(30) Priorität: 12.08.2016 AT 507342016
(43) Veröffentlichungstag der Anmeldung: 21.02.2018
(73) Patentinhaber: ATM Qness GmbH, 5440 Golling an der Salzach (AT)
(72) Erfinder: HOELL, Robert, 5440 Scheffau (AT)
(74) Vertreter: Beer & Partner Patentanwälte KG

(56) Entgegenhaltungen:
- DE-A1-102011 084 102
- DE-A1-102012 100 639
- DE-A1-102014 104 704

## Beschreibung

Die Erfindung betrifft ein Verfahren zum Festlegen eines oder mehrerer Messpunkte auf wenigstens einer Probe in einem Probenhalter für eine Härteprüfung in einer Härteprüfvorrichtung, wobei die Härteprüfvorrichtung einen Tisch, einen Werkzeughalter mit wenigstens einem Eindringkörper und wenigstens einem Objektiv, und gegebenenfalls eine Übersichtsbildkamera und einen Bildschirm, aufweist, wobei der Probenhalter am Tisch in x- und y-Richtung positionierbar ist und wobei der Tisch und/oder der Werkzeughalter der Härteprüfvorrichtung in z-Richtung, relativ zueinander, verschiebbar sind.

Zudem betrifft die Erfindung eine Härteprüfvorrichtung. Zur Programmierung einer aus dem Stand der Technik bekannten Härteprüfvorrichtung müssen viele einzelne Schritte manuell gesetzt bzw. viele Abläufe manuell definiert werden. Beispielsweise muss nach dem Einspannen der Probe in einen Probenhalter und dem Positionieren dieses Probenhalters in x- und y-Richtung, d.h. in der waagrechten Ebene, auf oder mit dem Tisch der Härteprüfvorrichtung die Höhe der Probe abgetastet bzw. vermessen werden, wobei unterschiedliche Sensoren am Werkzeughalter zum Einsatz kommen können. Eine Bedienungsperson muss diesen Vorgang der Höhenermittlung in z-Richtung einleiten, überwachen und/oder manuell durchführen. Im Anschluss daran muss mit Hilfe weiterer Sensoren am Werkzeughalter oder mit einem oder mehreren Objektiven die Oberfläche der Probe fokussiert werden, sodass ein möglichst scharfes Bild der Probe erstellt werden kann. Dabei muss wiederum die Bedienungsperson aktiv eingreifen, indem sie festlegt, an welcher Position die am Werkzeughalter angeordnete Kamera für die Aufnahme des Bildes positioniert wird. Durch die von der Bedienungsperson vorzunehmenden Eingaben an der Härteprüfvorrichtung bzw. an einer mit der Härteprüfvorrichtung verbundenen Steuerung wird viel Zeit benötigt, vor allem, weil die Bedienungsperson bei der Bewegung des Werkzeughalters zwischen zwei Positionen meist nicht den kürzesten und damit zeitsparendsten Weg zurücklegt, u.a. auch deshalb, weil sie darauf achten muss, eine Kollision zwischen Werkzeughalter bzw. Werkzeug und Probe zu vermeiden. Dies trifft vor allem für Messungen an Proben zu, die eine in z-Richtung ausgeprägte, dreidimensionale Geometrie aufweisen.

Eine gattungsgemäße Härteprüfvorrichtung zum Ausführen eines Verfahrens zum Festlegen eines oder mehrerer Messpunkte auf einer Probe für eine automatisierte Härteprüfung ist beispielsweise aus DE 10 2011 084 102 A1, DE 10 2014 104704 A1 oder DE 10 2012 100639 A1 bekannt.

Der Erfindung liegt die Aufgabe zu Grunde, ein Verfahren der eingangs genannten Art bereit zu stellen, welches das Festlegen eines oder mehrerer Messpunkte auf wenigstens einer Probe vereinfacht. Insbesondere soll dadurch Zeit gespart und, indem das Risiko einer Kollision zwischen Werkzeughalter und Probe minimiert wird, einer Beschädigung der Härteprüfvorrichtung und von Proben vorgebeugt werden.

Gelöst wird diese Aufgabe erfindungsgemäß mit einem Verfahren, welches die Merkmale von Anspruch 1 aufweist, mit einer Härteprüfvorrichtung, welche die Merkmale von Anspruch 14 aufweist

Ein besonderer Vorteil der Erfindung liegt darin, dass in einem mit der Härteprüfvorrichtung verbundenen, elektronischen Datenspeicher ein oder mehrere virtuelle, dreidimensionale Modelle einer oder mehrerer Proben bzw. eines oder mehrerer Probenhalter gespeichert sind und für das Verfahren bereitgestellt werden. Es wird, anders als aus dem Stand der Technik bekannt, jedem manuell oder computerunterstützt festgelegten Punkt, insbesondere jedem Messpunkt, zusätzlich zu einer x- und einer y-Koordinate aufgrund des bereitgestellten dreidimensionalen Modells auch eine z-Koordinate in der Härteprüfvorrichtung zugewiesen. Der Werkzeughalter der Härteprüfvorrichtung kann mit daran angeordnetem/angeordneten Objektiv(en), Eindringkörper(n) und gegebenenfalls Sensor(en) automatisch über und in passendem Abstand zur Probe positioniert werden. Der Weg, den der Werkzeughalter dafür zurücklegen muss, kann optimiert werden, wodurch Zeit eingespart und das Risiko einer Kollision von Werkzeughalter und Probe bzw. Probenhalterung ausgeschlossen wird.

Das erfindungsgemäße Verfahren zum Festlegen von einem oder mehreren Messpunkten wird beispielsweise wie folgt durchgeführt:

In einem ersten Schritt wird aus einem elektronischen Datenspeicher ein virtuelles, dreidimensionales Modell eines Probenhalters ausgewählt, auf dem wenigstens ein aus dem elektronischen Datenspeicher ausgewähltes, virtuelles, dreidimensionales Modell einer Probe angeordnet wird, sodass ein virtuelles, dreidimensionales Modell eines Probenhalters mit Probe bereitgestellt wird. Denkbar ist auch, dass ein bereits fertig zusammengestelltes Modell eines Probenhalters mit wenigstens einer Probe aus dem elektronischen Datenspeicher bereitgestellt wird. Theoretisch könnte auch nur eine Probe ausgewählt werden, wenn kein Probenhalter erforderlich ist, ohne den Rahmen der Erfindung zu verlassen.

Vorher oder im Anschluss daran wird der mit wenigstens einer Probe bestückte Probenhalter auf dem Tisch der Härteprüfvorrichtung positioniert. Diese Position kann fix vorgegeben sein. Es ist jedoch genauso denkbar, dass die Position mittels Sensoren bzw. Kameras und einem geeigneten Bilderkennungsprogramm eingelesen wird, oder dass die Lage von Probenhalter und Probe in der Härteprüfvorrichtung manuell festgelegt wird.

Für den Fall, dass im gesamten Verfahren kein Bild, insbesondere kein Übersichtsbild und/oder Detailbild, der Probe erstellt wird, weil der oder die Messpunkte nur auf dem dreidimensionalen Modell bzw. dessen Darstellung auf dem Bildschirm festgelegt werden, spielt es keine Rolle, wann der Probenhalter mit der Probe auf dem Tisch platziert wird. In diesem speziellen Fall kann der Probenhalter mit Probe auch erst am Tisch platziert werden, kurz bevor eine Härteprüfung vorgenommen wird.

In einer bevorzugten Durchführungsform des Verfahrens kann nach dem Platzieren bzw. Positionieren des mit der Probe bestückten Probenhalters mit einer an der Härteprüfvorrichtung, vorzugsweise im Bereich des Werkzeughalters, angeordneten Übersichtsbildkamera ein Übersichtsbild aufgenommen werden. Denkbar wäre auch, dass ein an dem Werkzeughalter angeordnetes Objektiv, das gegebenenfalls automatisch auf die Probenoberfläche fokussiert, ein einzelnes Übersichtsbild oder mehrere Bilder aufnimmt, die zu einem einzigen Übersichtsbild zusammengefügt werden.

In einem nächsten Verfahrensschritt wird das Modell des Probenhalters mit der Probe oder das Übersichtsbild auf einem Bildschirm dargestellt bzw. visualisiert. Im Sinne der Erfindung wird dabei auch die Anzeige durch andere optische und elektronische Anzeigemittel, wie beispielsweise Projektoren, als Visualisierung auf einem Bildschirm angesehen.

In einer vorteilhaften Weiterentwicklung des Verfahrens können die Darstellungen des virtuellen, dreidimensionalen Modells und des Übersichtsbildes überlagert werden. Diese zusätzlich mögliche Funktion erlaubt eine optische Überprüfung, bei der festgestellt werden kann, ob das richtige Modell für den Probenhalter und/oder die Probe aus dem Datenspeicher bereitgestellt wurde, und/oder ob die Lage von Probenhalter und/oder Probe am Tisch korrekt ist. Gegebenenfalls kann daraufhin die Lage der Probe auf dem Tisch korrigiert werden, bis sie mit der Lage des virtuellen Modells auf dem Bildschirm übereinstimmt. Alternativ dazu wäre es auch vorstellbar, die Darstellung des virtuellen Modells manuell zu drehen bzw. zu verschieben, bis eine Übereinstimmung erzielt wird. Eine Übereinstimmung kann in einer Weiterentwicklung des Verfahrens auch automatisch mittels einer digitalen Erkennung der realen Probe und einer automatischen, digitalen Korrektur der Darstellung des virtuellen Modells durch eine Steuerung erzielt werden.

In einem nächsten erfindungsgemäßen Verfahrensschritt wird am Bildschirm mit Hilfe eines geeigneten elektronischen Eingabemittels, wie beispielsweise einer Tastatur, einer Computermaus oder eines Touchscreens, ein Punkt auf der Darstellung des Modells und/oder des Übersichtsbildes markiert. Dieser Punkt ist in weiterer Folge des Verfahrens ein Bezugs-, Start-, Zwischen- oder Endpunkt für mehrere Messpunkte (gegebenenfalls eine Messreihe) bzw. ein Bezugs- oder Messpunkt für eine Einzelmessung.

In einer alternativen Durchführungsform des Verfahrens wäre es denkbar, die Lage des Punktes in x- bzw. y-Richtung anhand von manuell einzugebenden Parametern festzulegen. Im Sinne der Erfindung markiert in so einer Durchführungsform die Steuerung automatisch einen Punkt mit den eingegebenen x- und y-Koordinaten.

Vor dem Markieren eines Punktes kann die Probe im Probenhalter manuell und/oder automatisch (indem der Probenhalter entsprechend ausgeführt ist) gedreht werden, um bei einer, beispielsweise als Rotationskörper ausgeführten, Probe einen oder mehrere Punkte bzw. Messpunkte entlang einer gekrümmten Fläche festlegen zu können.

Vor, während oder nach dem Markieren des Punktes wird dem erfindungsgemäßen Verfahren in einem weiteren Schritt eine Messmethode zugewiesen.

In einer besonders bevorzugten Durchführungsform des Verfahrens wird die Messmethode manuell aus einer, vorzugsweise im elektronischen Datenspeicher abgespeicherten, Messmethodenliste ausgewählt. Denkbar wäre es, standardisierte Messmethoden, wie beispielsweise eine Einzelpunkt-, Reihen-, CHD-, SHD-, oder Flächenpunktmessung, oder aber auch nicht standardisierte Messmethoden zur Auswahl zu stellen.

In einer alternativen Durchführungsform kann die Zuweisung der Messmethode auch automatisch erfolgen, beispielsweise indem im Vorfeld eine Messmethode festgelegt wird, oder indem nur die Ausführung einer einzigen Messmethode möglich ist, was im Sinne der Erfindung auch als automatische Zuweisung einer Messmethode angesehen wird.

In einer bevorzugten Durchführungsform des Verfahrens wird in einem weiteren Verfahrensschritt durch ein am Werkzeughalter angeordnetes Objektiv mit Hilfe einer Kamera ein vergrößertes, reales Detailbild des Abschnittes, in dem der Punkt angeordnet ist, aufgenommen und bereit- bzw. dargestellt. Dafür kann der Werkzeughalter mit dem Objektiv, gegebenenfalls nach einem Objektivwechsel, automatisch über dem Punkt positioniert werden, wobei durch die aus dem virtuellen Modell bekannte Geometrie des Probenhalters mit Probe eine Kollision von Objektiv und Probenhalter mit Probe verhindert wird. Durch die aus dem virtuellen Modell berechnete z-Koordinate des Messpunktes kann das Objektiv mit bekannten optischen Eigenschaften automatisch auf den Punkt bzw. Messpunkt zufahren und/oder diesen fokussieren, woraufhin eine dem Objektiv zugeordnete Kamera automatisch ein Detailbild aufnimmt. Denkbar ist es dabei, das Detailbild auf dem Bildschirm über dem Modell und/oder dem Übersichtsbild, vorzugsweise im Bereich der Position des Punktes angeordnet, darzustellen, gegebenenfalls das Übersichtsbild mit dem Detailbild zu überlagern.

Besonders vorteilhaft ist eine Durchführungsform des Verfahrens, bei der das Detailbild dazu herangezogen wird, die Position des Punktes auf der Probenoberfläche manuell zu korrigieren, wobei gegebenenfalls weiter in das Detailbild hineingezoomt werden kann. Zum Korrigieren kann der Punkt auf dem Detailbild der Probe beispielsweise in x- und/oder y-Richtung verschoben werden. Denkbar ist es auch, unterschiedliche digitale Werkzeuge, wie eine automatische Randkantenerkennung, für das Korrigieren der Position des Punktes in der Detailaufnahme zu verwenden.

Um den Punkt zu setzen, kann in einer alternativen Durchführungsform des Verfahrens, insbesondere wenn auf ein Übersichtsbild und/oder Detailbild verzichtet wird, nur in die Darstellung des Modells hineingezoomt werden. Aufgrund möglicher Ungenauigkeiten der Platzierung des Probenhalters hat die Position des Punktes nur unter Zuhilfenahme des virtuellen Modells in der Regel jedoch höchstens eine Genauigkeit von +/-0,2 mm.

In einem nächsten erfindungsgemäßen Verfahrensschritt wird ein Messpunkt oder werden mehrere Messpunkte automatisch definiert. Aufgrund der zugewiesenen Messmethode und der Lage bzw. Position des markierten und gegebenenfalls lagekorrigierten Punktes wird dem Messpunkt oder werden den Messpunkten (eine) x- und y-Koordinate(n) und in Verbindung mit dem dreidimensionalen Modell auch (eine) bekannte bzw. herleitbare z-Koordinate(n) in der Härteprüfvorrichtung zugewiesen.

Der Punkt kann je nach zugewiesener Messmethode ein Bezugspunkt bzw. Startpunkt sein, von dem weg in festgelegtem Abstand und in festgelegter Richtung ein oder mehrere Messpunkt(e) definiert wird/werden. Es kann somit automatisch eine Messreihe definiert werden. Der Punkt kann aber auch ein einzelner Messpunkt selbst oder einer von mehreren Messpunkten sein, die zu einer Messreihe zusammengeführt werden können. Die benötigten Parameter für Abstand/Abstände und Richtungen/Richtungen werden entweder automatisch oder manuell, beispielsweise bei der manuellen Zuweisung der Messmethode, festgelegt.

In einem weiteren Schritt des erfindungsgemäßen Verfahrens werden die x-, y- und z-Koordinaten jedes definierten Messpunktes im elektronischen Datenspeicher gespeichert. Dabei wird als Speichern im Sinne der Erfindung sowohl ein temporäres Speichern der Koordinaten in beispielsweise einem Arbeitsspeicher als auch ein permanentes Speichern in einem Langzeitspeicher, z.B. einer Festplatte oder einer SD-Karte, angesehen.

In einer erfindungsgemäßen Weiterentwicklung des Verfahrens können bestimmte Verfahrensschritte, wie beispielsweise das Darstellen, Zuweisen einer Messmethode, Markieren eines Punktes, Definieren von Messpunkten und Speichern der Koordinaten von Messpunkten, sowie dazwischen stattfindende Verfahrensschritte beliebig oft wiederholt werden. Die so festgelegten Messpunkte können im elektronischen Datenspeicher gespeichert und mehrere Messpunkte können gegebenenfalls automatisch oder manuell zu einer Messreihe verknüpft werden.

Vor dem Festlegen eines weiteren Punktes kann die Probe im Probenhalter manuell und/oder automatisch (gegebenenfalls nochmals) gedreht werden.

In weiterer Folge kann erfindungsgemäß an jedem festgelegten Messpunkt automatisch mittels eines am Werkzeughalter angeordneten Eindringkörpers ein Eindruck erzeugt werden, wodurch eine Anzahl an Eindrücken entsteht, die der Anzahl der Messpunkte entspricht.

Bei mehreren Messpunkten kann der Eindringkörper automatisch und in optimierter Reihenfolge auf dem kürzesten Weg der Reihe nach an den Messpunkten positioniert werden und Eindrücke erzeugen. Bei diesem optimierten Bewegungsablauf kann das Risiko einer Kollision von Werkzeug bzw. Werkzeughalter mit der Probe bzw. dem Probenhalter automatisch ausgeschaltet werden, da die Geometrie des Probenhalters mit der Probe auf der einen Seite und des Werkzeughalters mit den Werkzeugen auf der anderen Seite bekannt ist.

Im Sinne der Erfindung ist es denkbar, dass die Eindrücke an den Messpunkten mit unterschiedlichen Eindringkörpern erzeugt werden, wobei die Eindringkörper unterschiedliche Formen von Eindrücken erzeugen können. Als Eindringkörper können alle möglichen, insbesondere für standardisierte Messverfahren bekannten Eindringkörper, wie beispielsweise eine Vickers-Pyramide, eine Knoop-Pyramide, eine Brinell-Kugel oder andere Eindringkörper, verwendet werden, je nach Anforderungen bzw. durchzuführendem Messverfahren.

Das Vermessen der Eindrücke kann bei der Erfindung in weiterer Folge direkt im Anschluss an das Erzeugen der Eindrücke oder auch zu einem späteren Zeitpunkt durchgeführt werden. Dies geschieht vorzugsweise vollautomatisch durch die computerunterstützte Steuerung, kann aber auch manuell unterstützt an einem Bildschirm durchgeführt werden, wobei das Anfahren der Messpunkte ebenfalls wieder computerunterstützt optimiert werden kann.

Eine erfindungsgemäße Härteprüfvorrichtung, die zum Ausführen des erfindungsgemäßen Verfahrens besonders geeignet ist, mit einem Tisch, einem Werkzeughalter mit wenigstens einem Eindringkörper und wenigstens einem Objektiv, gegebenenfalls mit einer Übersichtsbildkamera und einem Bildschirm, wobei ein Probenhalter am Tisch in x- und y-Richtung positionierbar ist und der Tisch und/oder der Werkzeughalter in z-Richtung relativ zueinander verschiebbar sind, weist erfindungsgemäß einen elektronischen Datenspeicher mit wenigstens einem virtuellen, dreidimensionalen Modell und wenigstens einer Messmethode, sowie eine Steuerung auf, welche aus vorgegebenen x- und y-Koordinaten eines Messpunktes anhand des Modells die z-Koordinaten des Messpunktes ermittelt.

Am Werkzeughalter der Härteprüfvorrichtung können ein oder mehrere Eindringkörper, Objektive, Kameras und/oder Sensoren angeordnet sein. Der Werkzeughalter kann beispielsweise als Werkzeugrevolver ausgeführt sein, um einen schnellen Wechsel zwischen den einzelnen daran angeordneten Werkzeugen (ein oder mehrere Eindringkörper und ein oder mehrere Objektive) zu ermöglichen. Andere Werkzeughalter, beispielsweise in Form von Schwenkkörpern, können ebenfalls verwendet werden.

Eine Übersichtsbildkamera kann am Werkzeughalter selbst, im Bereich des Werkzeughalters oder aber auch an irgendeinem anderen passenden Ort der Härteprüfvorrichtung angeordnet sein.

Die Steuerung kann alle automatischen und automatisierten Verfahrensschritte, insbesondere computerunterstützt bzw. computerimplementiert, ausführen. Sie besteht beispielsweise aus einer Recheneinheit mit einer auf die Verfahrensschritte abgestimmten Steuerungssoftware. Am Werkzeughalter oder an anderen Orten der Härteprüfungsvorrichtung angeordnete Sensoren können mit der Steuerung in Verbindung stehen und Informationen an die Steuerung weiterleiten.

Bevorzugte und vorteilhafte Ausführungsformen der Erfindung sind Gegenstand der übrigen Unteransprüche.

Weitere Einzelheiten, Merkmale und Vorteile der Erfindung ergeben sich aus der nachstehenden Beschreibung unter Bezugnahme auf die angeschlossenen Zeichnungen, in welchen bevorzugte Ausführungsformen der Erfindung dargestellt sind. Es zeigt:
- Fig. 1: eine isometrische Ansicht einer erfindungsgemäßen Härteprüfvorrichtung, auf der ein Probenhalter mit mehreren Proben platziert ist,
- Fig. 2: eine weitere Ausführungsform eines Probenhalters mit einer einzelnen, rotationssymmetrischen Probe,
- Fig. 3: einen Schritt des erfindungsgemäßen Verfahrens, in dem ein virtuelles, dreidimensionales Modell bereitgestellt wird,
- Fig. 4: einen weiteren Schritt des erfindungsgemäßen Verfahrens, in dem ein Punkt auf dem Modell markiert wird, und
- Fig. 5: noch einen weiteren Schritt des erfindungsgemäßen Verfahrens, in dem die Position des Punktes auf einem vergrößerten Bild dargestellt wird und korrigiert werden kann.

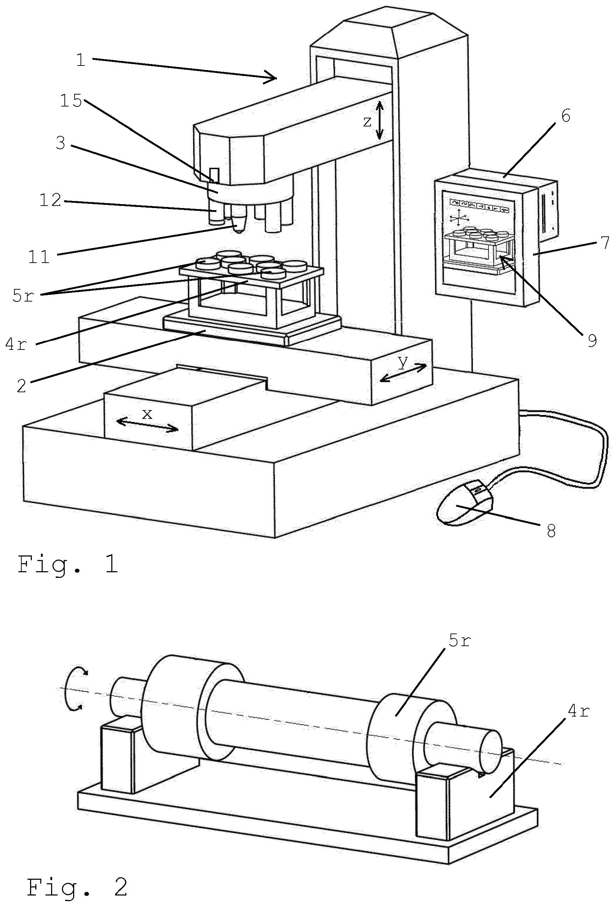

Fig. 1 zeigt eine erfindungsgemäße Härteprüfvorrichtung 1 mit einem in x- und y-Richtung positionierbaren Tisch 2 und einem in z-Richtung verschiebbaren Werkzeughalter 3. Auf dem Tisch 2 ist eine mögliche Ausführungsform eines Probenhalters 4r mit Proben 5r positioniert.

Die Härteprüfvorrichtung 1 weist eine Steuerung 6 mit einem elektronischen Datenspeicher für virtuelle, dreidimensionale Modelle 9 und einen Bildschirm 7, z.B. einen Touchscreen, auf. Zur einfacheren Bedienung kann auch ein elektronisches Eingabemittel 8, wie beispielsweise eine Tastatur und/oder eine Computermaus, mit der Steuerung 6 verbunden sein.

An dem Werkzeughalter 3 sind mehrere Werkzeuge, wie ein oder mehrere Eindringkörper 11, ein oder mehrere Objektive 12 und gegebenenfalls Sensoren angeordnet. Im Bereich des Werkzeughalters 3 ist außerdem eine Übersichtsbildkamera 15 angeordnet.

Fig. 2 zeigt beispielhaft eine weitere Ausführungsform eines Probenhalters 4r mit einer rotationssymmetrischen Probe 5r.

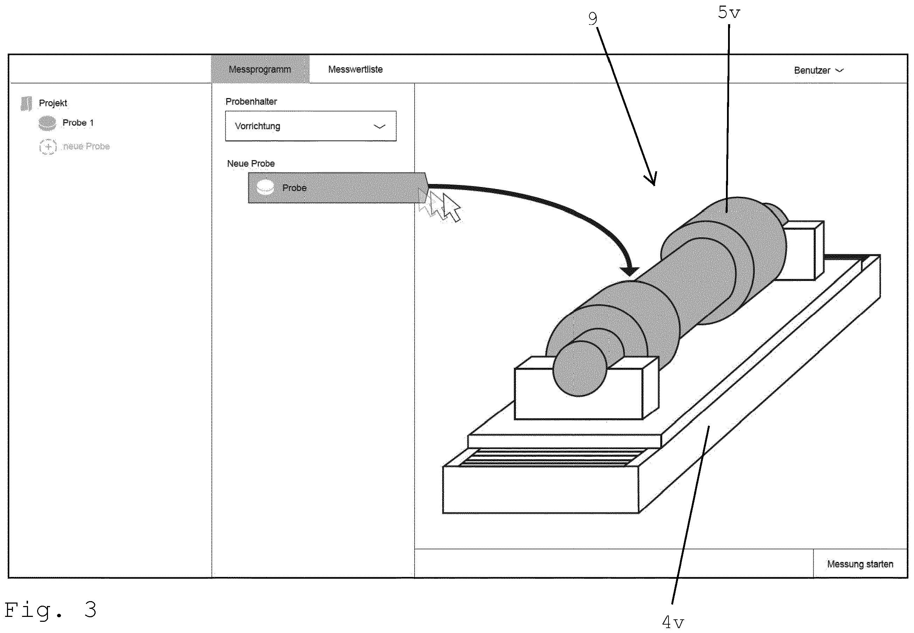

In Fig. 3 ist ein Verfahrensschritt dargestellt, in dem ein bereits vorher ausgewählter und bereitgestellter, virtueller Probenhalter 4v mit einer, gegebenenfalls aus einer Liste ausgewählten, virtuellen Probe 5v bestückt und somit ein virtuelles, dreidimensionales Modell 9 aus dem elektronischen Datenspeicher bereitgestellt und auf dem Bildschirm 7 dargestellt wird.

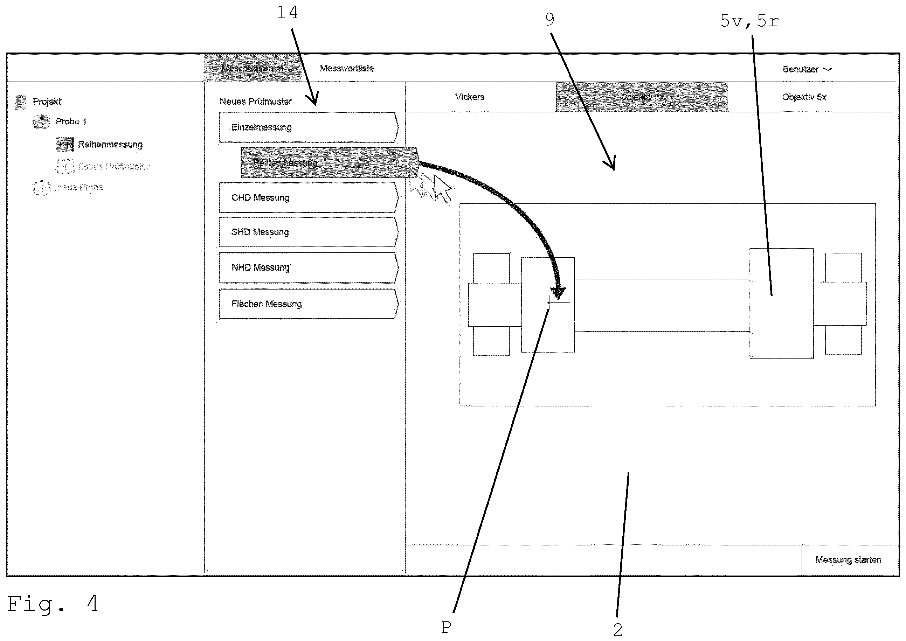

Fig. 4 zeigt die Darstellung der virtuellen, dreidimensionalen Probe 5v auf dem Bildschirm 7, die von einem von einer Übersichtskamera 15 aufgenommenen Übersichtsbild der realen Probe 5r überlagert dargestellt wird. Dies ermöglicht eine Kontrolle der Auswahl des virtuellen Modells 9 bzw. der virtuellen Probe 5v und der Position der realen Probe 5r auf dem Tisch 2, welche in der dargestellten Ausführungsform exakt übereinstimmen.

In Fig. 4 ist dargestellt, wie in weiterer Folge mit Hilfe des elektronischen Eingabemittels 8 und des in der Steuerung 6 der Härteprüfungsvorrichtung 1 laufenden Computerprogramms aus einer Liste 14 eine Messmethode (z.B. Reihenmessung) ausgewählt und ein Punkt P auf der Darstellung der Probe 5v, 5r markiert wird.

Bei Bedarf kann natürlich vorher oder nachher auch noch ein Eindringkörper ausgewählt werden.

Nachdem anschließend der Werkzeughalter 3 mit einem Objektiv 12 automatisch über dem Punkt P der realen Probe 5r positioniert wurde, kann ein durch das Objektiv 12 automatisch aufgenommenes und vergrößertes Detailbild des Abschnittes der realen Probe 5r mit dem Punkt P auf dem Bildschirm 7 dargestellt werden, wie

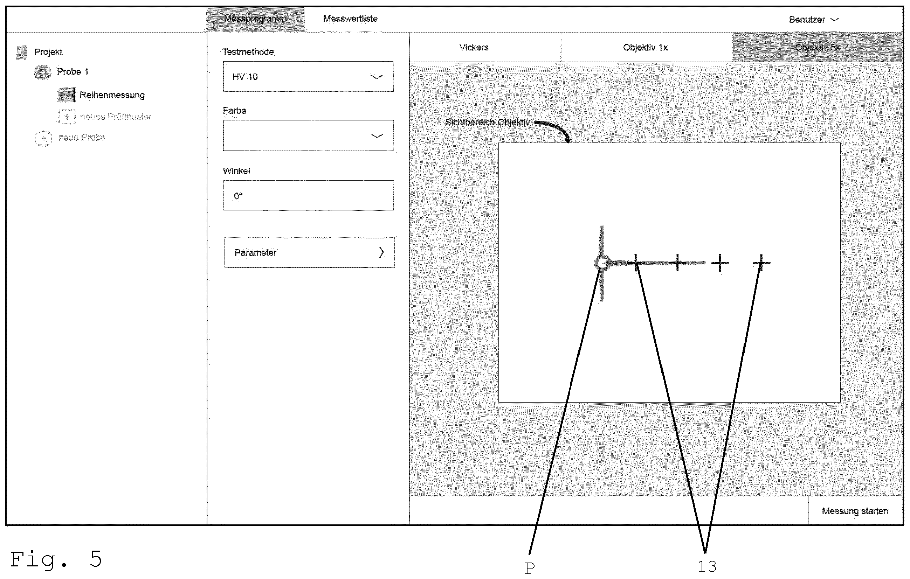

Fig. 5 zeigt. Die Position des Punktes P kann dann mit Hilfe computerimplementierter Werkzeuge und/oder der elektronischen Eingabemittel 8 in x- und y-Richtung korrigiert werden. Das computerimplementierte Werkzeug kann beispielsweise ein Randkantenerkennungsprogramm sein, mit dem eine Kante automatisch erkannt und ein Abstand zu dieser Kante festgelegt wird.

Je nach ausgewählter Messmethode wird an der Position des Punktes P ein Messpunkt 13 definiert und/oder es werden einer oder mehrere Messpunkte 13 an davon beabstandeten Positionen auf der Oberfläche der Probe 5r definiert. Jedem Messpunkt 13 werden durch die Steuerung 6 x-, y-Koordinaten und, aufgrund der bekannten dreidimensionalen Geometrie des Modells, auch die z-Koordinaten in der Härteprüfvorrichtung 1 zugewiesen, wobei die Koordinaten jedes Messpunktes 13 im elektronischen Datenspeicher abgespeichert werden.

Anschließend kann die eigentliche Härteprüfung in einer Einzelmessung oder einer Messreihe, wie an sich aus dem Stand der Technik bekannt, durchgeführt werden, wobei erfindungsgemäß - insbesondere bei Messreihen - jedoch ein hinsichtlich des Weges des Werkzeughalters 3 optimierter und garantiert kollisionsfreier Ablauf gewährleistet ist.

## Patentansprüche

1. Verfahren zum Festlegen eines oder mehrerer Messpunkte (13) auf wenigstens einer Probe (5r) in einem Probenhalter (4r) für eine Härteprüfung in einer Härteprüfvorrichtung (1), wobei die Härteprüfvorrichtung (1) einen Tisch (2), einen Werkzeughalter (3) mit wenigstens einem Eindringkörper (11) und wenigstens einem Objektiv (12), und gegebenenfalls eine Übersichtsbildkamera (15) und einen Bildschirm (7), aufweist, wobei der Probenhalter (4r) am Tisch (2) in x- und y-Richtung positionierbar ist und wobei der Tisch (2) und/oder der Werkzeughalter (3) der Härteprüfvorrichtung (1) in z-Richtung, relativ zueinander, verschiebbar sind, **gekennzeichnet durch** die folgenden Schritte:
a) Auswählen und Bereitstellen eines virtuellen, dreidimensionalen Modells (9) des Probenhalters (4v) mit wenigstens einer darauf angeordneten Probe (5v) aus einem elektronischen Datenspeicher,
b) Positionieren des mit der Probe (5r) bestückten Probenhalters (4r) am Tisch (2),
c) automatisches Darstellen des Modells (9) und/oder eines von der Probe (5r) angefertigten Übersichtsbildes auf dem Bildschirm (7),
d) Zuweisen einer Messmethode,
e) Markieren eines Punktes (P) auf der Darstellung des Modells (9) und/oder des Übersichtsbildes der Probe (5r) am Bildschirm (7),
f) Automatisches Definieren von einem oder mehreren Messpunkt(en) (13) aufgrund der Messmethode, wobei jedem Messpunkt (13) automatisch aufgrund der Position des Punktes (P) und der zugewiesenen Messmethode x- und y-Koordinaten und anhand des virtuellen Modells (9) z-Koordinaten in der Härteprüfungsvorrichtung (1) zugewiesen werden,
g) automatisches Speichern der x-, y- und z-Koordinaten jedes Messpunktes (13) in einem Datenspeicher, und
h) Erzeugen einer der Anzahl der Messpunkte (13) entsprechenden Anzahl von Eindrücken zum automatischen Durchführen der Härteprüfung mittels des Eindringkörpers (11) .

2. Verfahren nach Anspruch 1, **dadurch gekennzeichnet, dass** die Messmethode in Schritt d) automatisch zugewiesen wird.

3. Verfahren nach Anspruch 1, **dadurch gekennzeichnet, dass** die Messmethode in Schritt d) manuell zugewiesen, insbesondere aus einer in einem Datenspeicher abgespeicherten Messmethodenliste (14) ausgewählt, wird.

4. Verfahren nach einem der Ansprüche 1 bis 3, **dadurch gekennzeichnet, dass** Schritt c) ein Schritt c0) vorangeht, bei dem automatisch ein Übersichtsbild der Probe (5r) durch die Übersichtsbildkamera (15) oder durch Zusammensetzen mehrerer durch das Objektiv (12) aufgenommener Einzelbilder erstellt wird.

5. Verfahren nach Anspruch 4, **dadurch gekennzeichnet, dass** vor Schritt c0) die Probe (5r), vorzugsweise automatisch anhand des Modells (9), unter der Übersichtsbildkamera (15) oder dem Objektiv (12) am Werkzeughalter (3) positioniert und die Probe (5r), vorzugsweise automatisch anhand des Modells (9), fokussiert wird.

6. Verfahren nach Anspruch 4 oder 5, **dadurch gekennzeichnet, dass** nach Schritt c) ein Schritt c1) folgt, bei dem das virtuelle Modell (9) auf dem Bildschirm (7) automatisch mit dem Übersichtsbild der Probe (5r) überlagert wird.

7. Verfahren nach einem der Ansprüche 1 bis 6, **dadurch gekennzeichnet, dass** nach Schritt e) ein Schritt e1) folgt, bei dem automatisch ein vergrößertes, vorzugsweise anhand der z-Koordinate fokussiertes, Detailbild eines Abschnittes der Probe (5r) mit dem Punkt (P) auf dem Bildschirm (7) dargestellt wird.

8. Verfahren nach Anspruch 7, **dadurch gekennzeichnet, dass** vor Schritt e1) das Objektiv (12), gegebenenfalls nach einem automatischen Objektivwechsel, automatisch über dem Punkt (P) positioniert wird.

9. Verfahren nach Anspruch 7 oder 8, **dadurch gekennzeichnet, dass** nach Schritt e1) ein Schritt e2) folgt, bei dem die Position des Punktes (P) auf dem vergrößerten Detailbild des Abschnittes der Probe (5r) manuell und/oder computerunterstützt und/oder automatisch, beispielsweise mit einem Randkantenerkennungsprogramm, in x- und/oder y-Richtung, korrigiert wird.

10. Verfahren nach einem der Ansprüche 1 bis 9, **dadurch gekennzeichnet, dass** die Probe (5r) vor Schritt e) automatisch und/oder manuell gedreht wird.

11. Verfahren nach einem der Ansprüche 1 bis 10, **dadurch gekennzeichnet, dass** die Schritte c) bis g) und gegebenenfalls das Drehen der Probe (5r) wiederholt werden.

12. Verfahren nach Anspruch 11, **dadurch gekennzeichnet, dass** gespeicherte Messpunkte (13) manuell und/oder automatisch zu einer Messreihe verknüpft werden.

13. Verfahren nach einem der Ansprüche 1 bis 12, **dadurch gekennzeichnet, dass** mindestens ein durch den Eindringkörper (11) erzeugter Eindruck automatisch und/oder manuell unterstützt vermessen wird.

14. Härteprüfvorrichtung (1) zum Ausführen des Verfahrens nach einem der Ansprüche 1 bis 13, mit einem Tisch (2), einem Werkzeughalter (3) mit wenigstens einem Eindringkörper (11) und wenigstens einem Objektiv (12), gegebenenfalls mit einer Übersichtsbildkamera (15) und einem Bildschirm (7), wobei ein Probenhalter (4r) am Tisch (2) in x- und y-Richtung positionierbar ist und der Tisch (2) und/oder der Werkzeughalter (3) in z-Richtung relativ zueinander verschiebbar sind, **dadurch gekennzeichnet, dass** die Härteprüfvorrichtung (1) einen elektronischen Datenspeicher mit wenigstens einem darin gespeicherten, virtuellen, dreidimensionalen Modell (9) und wenigstens einer Messmethode, sowie eine Steuerung (6) zum Ausführen der automatisierten Verfahrensschritte nach einem der Ansprüche 1 bis 13 aufweist.

## Claims

1. Method for setting one or more measuring points (13) on at least one specimen (5r) in a specimen holder (4r) for a hardness test in a hardness testing device (1), wherein the hardness testing device (1) comprises a table (2), a tool holder (3) having at least one indenter (11) and at least one lens (12), and optionally an overview image camera (15) and a screen (7), wherein the specimen holder (4r) is positionable on the table (2) in x- and y-direction and wherein the table (2) and/or the tool holder (3) of the hardness testing device (1) are displaceable in z-direction, relative to each other, **characterized by** the following steps:
a) selecting and providing a virtual, three-dimensional model (9) of the specimen holder (4v) having at least one specimen (5v) placed thereon from an electronic data storage,
b) positioning the specimen holder (4r) loaded with the specimen (5r) on the table (2),
c) automatically displaying the model (9) and/or an overview image made of the specimen (5r) on the screen (7),
d) assigning a measurement method,
e) marking a point (P) on the display of the model (9) and/or the overview image of the specimen (5r) on the screen (7),
f) automatic definition of one or more measuring point(s) (13) based on the measuring method, wherein, based on the position of the point (P) and the assigned measuring method, x- and y-coordinates and, based on the virtual model (9), z-coordinates are automatically assigned to each measuring point (13) in the hardness testing device (1),
g) automatically storing the x-, y- and z-coordinates of each measuring point (13) in a data memory, and
h) generating a number of indentations corresponding to the number of measuring points (13) for automatically performing the hardness test by means of the indenter (11) .

2. Method according to claim 1, **characterized in that** the measurement method is automatically assigned in step d).

3. Method according to claim 1, **characterized in that** the measuring method is manually assigned in step d), in particular selected from a measuring method list (14) stored in a data memory.

4. Method according to one of claims 1 to 3, **characterized in that** step c) is preceded by step c0) in which an overview image of the specimen (5r) is automatically created by the overview image camera (15) or by compositing a plurality of individual images captured by the lens (12).

5. Method according to claim 4, **characterized in that** before step c0) the specimen (5r) is positioned, preferably automatically on the basis of the model (9), under the overview image camera (15) or the lens (12) on the tool holder (3) and the specimen (5r) is focused, preferably automatically on the basis of the model (9).

6. Method according to claim 4 or 5, **characterized in that** step c) is followed by a step c1) in which the virtual model (9) on the screen (7) is automatically superimposed on the overview image of the specimen (5r).

7. Method according to one of claims 1 to 6, **characterized in that** step e) is followed by a step e1) in which an enlarged detailed image, preferably focused on the basis of the z-coordinate, of a section of the specimen (5r) with the point (P) is automatically displayed on the screen (7).

8. Method according to claim 7, **characterized in that** before step e1) the lens (12) is automatically positioned over the point (P), optionally after an automatic lens change.

9. Method according to claim 7 or 8, **characterized in that** step e1) is followed by step e2), in which the position of the point (P) on the enlarged detailed image of the section of the specimen (5r) is corrected manually and/or computer-aided and/or automatically, for example with an edge detection program, in x- and/or y- direction.

10. Method according to one of claims 1 to 9, **characterized in that** the specimen (5r) is rotated automatically and/or manually before step e).

11. Method according to one of claims 1 to 10, **characterized in that** steps c) to g) and, optionally, the rotation of the specimen (5r) are repeated.

12. Method according to claim 11, **characterized in that** stored measuring points (13) are linked manually and/or automatically to form a series of measurements.

13. Method according to one of claims 1 to 12, **characterized in that** at least one indentation produced by the indenter (11) is measured automatically and/or in a manually assisted manner.

14. Hardness testing device (1) for carrying out the method according to one of claims 1 to 13, comprising a table (2), a tool holder (3) having at least one indenter (11) and at least one lens (12), optionally with an overview image camera (15) and a screen (7), wherein a specimen holder (4r) can be positioned on the table (2) in the x- and y-direction and the table (2) and/or the tool holder (3) can be displaced relative to one another in the z-direction, **characterized in that** the hardness testing device (1) comprises an electronic data memory with at least one virtual, three-dimensional model (9) stored therein and at least one measuring method, as well as a controller (6) for carrying out the automated method steps according to one of the claims 1 to 13.

## Revendications

1. Procédé pour définir un ou plusieurs points de mesure (13) sur au moins un échantillon (5r) dans un porte-échantillon (4r) pour un essai de dureté dans un dispositif d'essai de dureté (1), le dispositif d'essai de dureté (1) présentant une table (2), un porte-outil (3) avec au moins un pénétrateur (11) et au moins un objectif (12), et éventuellement une caméra de vue d'ensemble (15) et un écran (7), le porte-échantillon (4r) sur la table (2) pouvant être positionné dans les directions x et y, et la table (2) et/ou le porte-outil (3) du dispositif d'essai de dureté (1) pouvant être déplacés l'un par rapport à l'autre dans la direction z, **caractérisé par** les étapes consistant à :
a) sélectionner et mettre à disposition un modèle tridimensionnel virtuel (9) du porte-échantillon (4v) avec au moins un échantillon (5v) disposé dessus à partir d'une mémoire de données électronique,
b) positionner le porte-échantillon (4r) équipé de l'échantillon (5r) sur la table (2),
c) représenter automatiquement le modèle (9) et/ou une vue d'ensemble obtenue de l'échantillon (5r) sur l'écran (7),
d) attribuer une méthode de mesure,
e) marquer un point (P) sur la représentation du modèle (9) et/ou de la vue d'ensemble de l'échantillon (5r) sur l'écran (7),
f) définir automatiquement un ou plusieurs points de mesure (13) sur la base de la méthode de mesure, dans lequel chaque point de mesure (13) se voit attribuer automatiquement des coordonnées x et y sur la base de la position du point (P) et de la méthode de mesure attribuée, et des coordonnées z sur la base du modèle virtuel (9) dans le dispositif d'essai de dureté (1),
g) enregistrer automatiquement les coordonnées x, y et z de chaque point de mesure (13) dans une mémoire de données, et
h) générer un nombre d'empreintes correspondant au nombre de points de mesure (13) pour effectuer automatiquement l'essai de dureté au moyen du pénétrateur (11).

2. Procédé selon la revendication 1, **caractérisé en ce qu'**à l'étape d), la méthode de mesure est attribuée automatiquement.

3. Procédé selon la revendication 1, **caractérisé en ce qu'**à l'étape d), la méthode de mesure est attribuée manuellement, en particulier sélectionnée dans une liste de méthodes de mesure (14) stockée dans une mémoire de données.

4. Procédé selon l'une des revendications 1 à 3, **caractérisé en ce que** l'étape c) est précédée d'une étape c0) lors de laquelle une vue d'ensemble de l'échantillon (5r) est créée automatiquement par la caméra de vue d'ensemble (15) ou par assemblage de plusieurs images individuelles prises par l'objectif (12).

5. Procédé selon la revendication 4, **caractérisé en ce que**, avant l'étape c0), l'échantillon (5r) est positionné, de préférence automatiquement à l'aide du modèle (9), sous la caméra de vue d'ensemble (15) ou l'objectif (12) sur le porte-outil (3) et l'échantillon (5r) est mis au point, de préférence automatiquement à l'aide du modèle (9).

6. Procédé selon la revendication 4 ou 5, **caractérisé en ce que** l'étape c) est suivie d'une étape c1) lors de laquelle le modèle virtuel (9) est superposé automatiquement à la vue d'ensemble de l'échantillon (5r) sur l'écran (7).

7. Procédé selon l'une des revendications 1 à 6, **caractérisé en ce que** l'étape e) est suivie d'une étape e1) lors de laquelle une image détaillée agrandie, de préférence mise au point à l'aide de la coordonnée z, d'une partie de l'échantillon (5r) avec le point (P) est représentée automatiquement sur l'écran (7) .

8. Procédé selon la revendication 7, **caractérisé en ce que**, avant l'étape e1), l'objectif (12) est positionné automatiquement au-dessus du point (P), éventuellement après un changement automatique d'objectif.

9. Procédé selon la revendication 7 ou 8, **caractérisé en ce que** l'étape e1) est suivie d'une étape e2) lors de laquelle la position du point (P) sur l'image détaillée agrandie de la partie de l'échantillon (5r) est corrigée manuellement et/ou de manière assistée par ordinateur et/ou automatiquement, par exemple à l'aide d'un programme de détection des contours, dans la direction x et/ou y.

10. Procédé selon l'une des revendications 1 à 9, **caractérisé en ce que** l'échantillon (5r) est tourné automatiquement et/ou manuellement avant l'étape e).

11. Procédé selon l'une des revendications 1 à 10, **caractérisé en ce que** les étapes c) à g) et éventuellement la rotation de l'échantillon (5r) sont répétées.

12. Procédé selon la revendication 11, **caractérisé en ce que** des points de mesure (13) enregistrés sont combinés manuellement et/ou automatiquement pour former une série de mesures.

13. Procédé selon l'une des revendications 1 à 12, **caractérisé en ce qu'**au moins une empreinte générée par le pénétrateur (11) est mesurée automatiquement et/ou avec une assistance manuelle.

14. Dispositif d'essai de dureté (1} pour mettre en œuvre le procédé selon l'une des revendications 1 à 13, comprenant une table (2), un porte-outil (3) avec au moins un pénétrateur (11) et au moins un objectif (12), éventuellement avec une caméra de vue d'ensemble (15) et un écran (7), un porte-échantillon (4r) sur la table (2) pouvant être positionné dans les directions x et y, et la table (2) et/ou le porte-outil (3) pouvant être déplacés l'un par rapport à l'autre dans la direction z, **caractérisé en ce que** le dispositif d'essai de dureté (1) présente une mémoire de données électronique dans laquelle sont enregistrés au moins un modèle tridimensionnel virtuel (9) et au moins une méthode de mesure, ainsi qu'une commande (6) pour exécuter les étapes de procédé automatisées selon l'une des revendications 1 à 13.
